# EUROPÄISCHE PATENTSCHRIFT

(11) **EP 1 364 270 B1**
(45) Veröffentlichungstag und Bekanntmachung des Hinweises auf die Patenterteilung: **17.10.2012**
(21) Anmeldenummer: 01991653.5
(22) Anmeldetag: 20.12.2001
(51) Int. Cl.: G06F 1/00

(54) **RECHNERANORDNUNG, DIE AN EIN DATENÜBERTRAGUNGSNETZ ANSCHLIESSBAR IST**
COMPUTER SYSTEM THAT CAN BE CONNECTED TO A DATA TRANSMISSION NETWORK
SYSTEME INFORMATIQUE RACCORDABLE A UN RESEAU DE TRANSMISSION DE DONNEES

(30) Priorität: 22.12.2000 DE 10064658
(43) Veröffentlichungstag der Anmeldung: 26.11.2003
(73) Patentinhaber: SIEMENS AKTIENGESELLSCHAFT, 80333 München (DE)
(72) Erfinder: ERHARDT, Eduard, 71665 Vaihingen (DE)
(86) Internationale Anmeldenummer: PCT/DE2001/004820
(87) Internationale Veröffentlichungsnummer: WO 2002/052387

(56) Entgegenhaltungen:
- DE-U- 20 014 381
- US-A- 6 061 794
- US-B1- 6 253 334

## Beschreibung

Die Erfindung betrifft eine Rechneranordnung nach dem Oberbegriff des Anspruchs 1.

Eine derartige Rechnereinrichtung ist aus der DE 3911407 A bekannt.

Rechneranordnungen, die an ein Datenübertragungsnetz, z. B. Internet oder Intranet, angeschlossen sind, meist einzelne Rechner, wie z. B. PCs, sind in zunehmendem Maße Computerviren und unerlaubten Zugriffen auf interne Daten ausgesetzt. Virenscanner können in der Regel nur bekannte Computerviren erkennen und beseitigen, nicht aber solche Viren, die völlig neu sind und gänzlich andere Strukturen als bisher bekannte Viren aufweisen. Insbesondere bei Rechnern in Verwaltungen, Banken, Versicherungen, der Industrie, z. B. Bedienen und Beobachten von Automatisierungssystemen, die zunehmend über öffentliche Datenübertragungsnetze mit anderen Rechneranordnungen, z. B. zentralen Leitstellen, kommunizieren, kann die Infizierung mit Computerviren zu immensen Schäden führen. So können als Trojaner bezeichnete Programme in den Rechner eingeschleust werden, die, z. B. als Nutzprogramm getarnt, im Verborgenen interne Daten ausspähen und diese an eine externe Stelle übermitteln.

Aus der oben genannten DE 3911407 A ist eine redundante Rechneranordnung mit mehreren parallelen Rechnern bekannt, die sich durch Vergleich ihrer Arbeitsergebnisse abgleichen. Damit können Fehler einzelner Rechner frühzeitig erkannt werden; ein Schutz gegen Computerviren oder unerlaubte Zugriffe auf interne Daten ist jedoch nicht gegeben.

Aus der WO 0036515 A ist es bekannt, zwischen eine Daten sendende Einrichtung, z. B. Internet, und eine Daten empfangende Einrichtung, z. B. Rechner, eine Einheit zu schalten, die die Daten auf Computerviren überprüft und im Falle einer Infizierung der Daten diese von der empfangenden Einheit fern hält und anderenfalls durchschaltet. Die Überprüfung der Daten ist jedoch auf bekannte Computerviren beschränkt, so dass ein Schutz gegen neue Computerviren nicht gegeben ist.

Aus der DE 20014381 A ist es bekannt, zur Ermöglichung und Prüfung einer Zugangsberechtigung einen temporären Zugangscode durch einen Zufallsgenerator zu erzeugen und den Zugangscode an ein personalisiertes Medium, z. B. Mobiltelefon des Zugangsberechtigten, zu senden.

Aus der US 6253334 A ist ein Rechner bekannt, der über parallele Schnittstellen mit einem Systembus in Verbindung steht. Wenn ein Ungleichgewicht in der Datenübertragung zwischen dem Systembus und einer der Schnittstellen detektiert wird, wird die Datenübertragung auf die andere Schnittstelle umgeleitet. Ein Schutz gegen Computerviren oder unerlaubte Zugriffe auf rechnerinterne Daten ist nicht vorgesehen.

Aus der US 6061794 ist es bekannt, Daten zwischen an einen Bus angeschlossenen Rechnern peer-to-peer unter Umgehung der jeweiligen Betriebssysteme zu übertragen. Um dabei unberechtigte Zugriffe zu vermeiden, erfolgt eine Authentizitäts- und Berechtigungsprüfung, wenn einer der Rechner eine peer-to-peer Datenübertragung anfordert.

Der Erfindung liegt die Aufgabe zugrunde, einen sicheren Schutz gegen Computerviren, unerlaubte Zugriffe auf interne Daten und Datenverlust im Falle einer Infizierung zu erreichen.

Gemäß der Erfindung wird die Aufgabe durch die in Anspruch 1 angegebene Rechneranordnung gelöst, von der vorteilhafte Weiterbildungen in den Unteransprüchen angegeben sind.

Die erfindungsgemäße Rechneranordnung besteht also aus zwei parallelen Rechnern, die praktisch den gleichen Hardwareaufbau aufweisen und mit gleicher Software konfiguriert sind. Beide Rechner arbeiten parallel, abwechselnd oder arbeitsteilig, wobei sie sich jedoch regelmäßig durch Vergleich ihrer Arbeitsergebnisse, beispielsweise durch Quersummenüberprüfung oder Vergleich vorgegebener Daten, abgleichen. Der Abgleich kann z. B. durch den Anwender ausgelöst oder automatisch beispielsweise bei Programmende, beim Schließen von Dateien, bei der Ein- und Ausgabe von Daten oder bei Speicherzugriffen gestartet werden. Zwischen den beiden Rechnern werden Daten nur dann ausgetauscht bzw. angebotene Daten nur dann übernommen, wenn die von den Rechnern gelieferten Arbeitsergebnisse gleich sind. Im Rahmen des Abgleichs können daher aufgrund von unterschiedlichen Arbeitsergebnissen der beiden Rechner Fehlfunktionen bzw. verfälschte Daten erkannt werden.

Um die geforderte Sicherheit zu erreichen, sind der Empfang von Daten aus dem Datenübertragungsnetz und zumindest die Erst-Verarbeitung der empfangenen Daten auf den ersten Rechner und das Senden von Daten auf das Datenübertragungsnetz auf den zweiten Rechner beschränkt. Dies kann durch eine entsprechende hardware- oder softwaremäßige Sende-Sperre bzw. Empfangs-Sperre erfolgen. Anstelle der Sende-Sperre kann beispielsweise auch vorgesehen werden, dass in dem ersten Rechner nur empfangene Daten speicherbar sind, so dass ein Senden von anderen als den empfangenen Daten nicht möglich ist. Im Rahmen der auf den ersten Rechner beschränkten Erst-Verarbeitung der empfangenen Daten können diese überprüft werden, wobei nur überprüfte Daten von dem zweiten Rechner unverschlossen, d. h. verarbeitbar, übernommen und abgespeichert werden können. Bei E-mails überprüfbare Daten sind beispielsweise die Adresse des Senders, der Betrefftext sowie weitere Teildaten, die je nach Softwareprodukt vollständig überprüfbar sind, so z. B. Textformate, nicht jedoch Makros. Die Überprüfung der Daten erfolgt dabei vorzugsweise unabhängig auf beiden Rechnern, wobei es nur nach einem Ergebnisabgleich zu einer Abspeicherung der Daten auf dem zweiten Rechner kommt. Von dem ersten Rechner empfangene, nicht überprüfte oder nicht überprüfbare Daten werden nur verschlossen (gekapselt), d. h. nicht verarbeitbar, von dem zweiten Rechner entgegengenommen. Dies gilt gleichermaßen für durch Verarbeitung dieser Daten auf dem ersten Rechner erzeugte neue Daten. Solche verschlossenen Daten können auf dem zweiten Rechner weder geöffnet noch verarbeitet werden, sondern nur als Anhang beispielsweise an ein Sende-E-mail angefügt werden.

Auf diese Weise wird erreicht, dass der zweite, redundante Rechner, der aufgrund von Hardware- oder Softwaremaßnahmen empfangsuntüchtig ist, frei von Computerviren bleibt und dass auch keine Computerviren beim Senden von Daten nach außen weitergegeben werden können. Auch können keine Daten durch so genannte Trojaner abgeholt oder verfälscht werden. Wird der erste Rechner aufgrund von empfangenen Daten mit Computerviren infiziert, so wird dies bei dem Abgleichen der beiden Rechner erkannt. In diesem Fall kann durch Kopieren des Zustandes des zweiten Rechners auf den ersten Rechner dieser wieder in einen virenfreien Zustand versetzt werden, ohne dass Daten oder bereits ausgeführte Arbeiten verloren gehen.

Um auszuschließen, dass in einem zentralen Datenspeicher enthaltene interne Daten der Rechneranordnung aufgrund einer Infizierung des empfangsfähigen ersten Rechners verfälscht oder gelöscht werden, ist der unmittelbare Zugriff auf diese Daten auf den zweiten Rechner beschränkt, wobei der erste Rechner diese Daten nur auf Anforderung über den zweiten Rechner erhält.

Bei vergleichsweise großen zu erbringenden Rechenleistungen kann ein unabhängiger redundanter, dritter Rechner vorgesehen sein, wobei sich der zweite und der dritte Rechner durch Vergleich ihrer Arbeitsergebnisse abgleichen. Im Falle eines Automatisierungssystems übernimmt z. B. der dritte Rechner Automatisierungsfunktionen, während der erste und der zweite Rechner für die Kommunikation über das Datenübertragungsnetz zuständig sind.

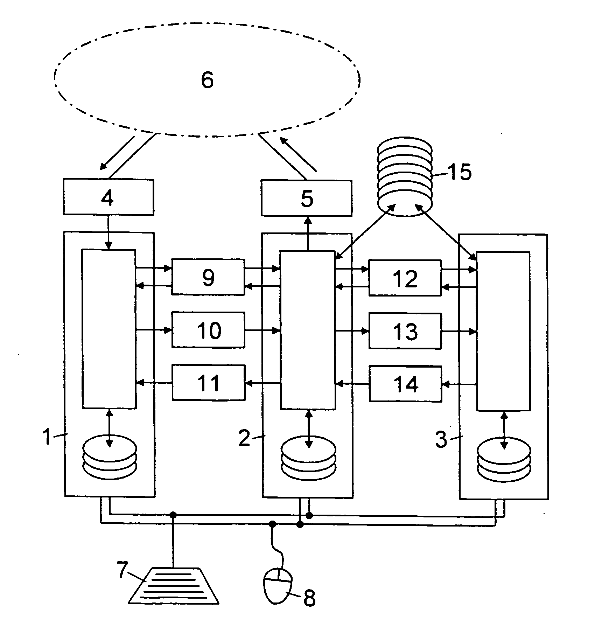

Im Weiteren wird die erfindungsgemäße Rechneranordnung anhand eines in der Figur der Zeichnung dargestellten Ausführungsbeispiels erläutert.

Die hier als Funktions-Blockschaltbild dargestellte Rechneranordnung besteht aus einem ersten Rechner 1, einem zweiten, redundanten Rechner 2 und einem optionalen, dritten Rechner 3. Die Rechner 1, 2 und 3 weisen, von den unten angegebenen Ausnahmen abgesehen, jeweils den gleichen Hardwareaufbau auf und sind mit der gleichen Software konfiguriert. Der Rechner 1 ist über einen Empfangstreiber 4 an einem Datenübertragungsnetz 5 angeschlossen und im Übrigen sendeuntüchtig. Der redundante Rechner 2 ist über einen Sendetreiber 6 an dem Datenübertragungsnetz 5 angeschlossen und im Übrigen empfangsuntüchtig. Der optionale, dritte Rechner 3 ist für den Fall vorgesehen, dass höhere Rechenleistungen erbracht werden sollen, wie z. B. das Bedienen und Beobachten von Automatisierungssystemen. Mit Ausnahme der Erst-Verarbeitung von empfangenen Daten, die auf den ersten Rechner 1 beschränkt ist, und der von dem dritten Rechner 3 zu erbringenden höheren Rechenleistungen werden in allen Rechnern 1, 2 und 3 die gleichen Funktionen ausgeführt, weswegen Anwender-Eingaben, die beispielsweise an einer Tastatur 7 oder einer Computermaus 8 vorgenommen werden, allen Rechnern 1, 2 und 3 parallel zugeführt werden.

In einem ersten Speicher bzw. Speicherbereich 9 werden die Arbeitsergebnisse der beiden Rechner 1 und 2 beispielsweise durch Quersummenüberprüfung usw. abgeglichen. Weitere Speicher bzw. Speicherbereiche 10 und 11 dienen zum Datenaustausch im Rahmen des Ergebnisabgleichs der beiden Rechner 1 und 2, wobei Daten nur dann ausgetauscht bzw. angebotene Daten nur dann akzeptiert werden, wenn die Arbeitsergebnisse der beiden Rechner 1 und 2 gleich sind.

Von dem Rechner 1 aus dem Datenübertragungsnetz 5 empfangene Daten, z. B. E-mails, werden im Rahmen des Datenaustauschs nur selektiv (z. B. Adresse des Senders, Betrefftext) bzw. in dem Umfang an den zweiten Rechner 2 weitergegeben, wie diese Daten vollständig überprüfbar sind (z. B. Textformate, nicht jedoch Makros). Die Prüfung wird auf beiden Rechnern 1 und 2 unabhängig ausgeführt, wobei die endgültige Übertragung und Abspeicherung in den jeweils anderen Rechner erst bei übereinstimmenden positiven Prüfergebnissen erfolgt. Im Übrigen ist die Erst-Verarbeitung von empfangenen Daten allein auf den ersten Rechner 1 beschränkt. Nicht überprüfbare empfangene Daten sowie durch Verarbeitung dieser Daten in dem Rechner 1 neu erzeugte Daten werden im Rahmen des Datenaustauschs nur in verschlossenem Zustand an den zweiten, redundanten Rechner 2 übergeben, der die verschlossenen Daten weder öffnen noch verarbeiten kann. Diese Daten können dann im verschlossenen Zustand nur als Anhang an andere zu sendende Daten, z. B. ein Sende-E-mail, angefügt werden.

Wird der erste Rechner 1 aufgrund von empfangenen Daten mit Computerviren infiziert, so wird dies bei dem regelmäßigen Abgleichen der beiden Rechner 1 und 2 erkannt. Aufgrund der oben erläuterten Sicherheitsmechanismen bei dem Datenaustausch zwischen den beiden Rechnern 1 und 2 ist ein Übergreifen der Computerviren von dem ersten Rechner 1 auf den zweiten Rechner 2 ausgeschlossen. Durch Kopieren des Zustandes des zweiten Rechners 2 auf den ersten Rechner 1 kann dieser wieder in einen virenfreien Zustand versetzt werden, ohne dass Daten verloren gehen. Durch die oben erläuterten Sicherheitsmechanismen wird weiterhin ein unerlaubter Zugriff über das Datenübertragungsnetz 5 auf interne Daten der Rechneranordnung ausgeschlossen.

Wie bereits erwähnt, werden größere Rechenleistungen im Wesentlichen von dem optional vorgesehenen, dritten Rechner 3 erbracht, wobei der erste Rechner 1 und der zweite Rechner 2 für die Kommunikation über das Datenübertragungsnetz 5 zuständig sind. Der dritte Rechner 3 gleicht sich dabei über Speicher bzw. Speicherbereiche 12, 13 und 14 mit dem zweiten Rechner 2 ab. Aus Sicherheitsgründen hat der erste Rechner 1 keinen Zugriff auf einen zentralen Datenspeicher 15 mit gemeinsamen Daten, die nur von dem Rechner 3 und gegebenenfalls dem Rechner 2 gelesen werden können und erforderlichenfalls dem ersten Rechner 1 bereitgestellt werden.

## Patentansprüche

1. Rechneranordnung, die an einem Datenübertragungsnetz (5) anschließbar ist, mit einem ersten Rechner (1) und einem davon unabhängigen redundanten, zweiten Rechner (2), wobei sich beide Rechner (1 und 2) durch Vergleich ihrer Arbeitsergebnisse abgleichen, **dadurch gekennzeichnet, dass** der Empfang von Daten aus dem Datenübertragungsnetz (5) auf den ersten Rechner (1) und das Senden von Daten auf das Datenübertragungsnetz (5) auf den zweiten Rechner (2) beschränkt ist, dass zumindest die Erst-Verarbeitung der empfangenen Daten auf den ersten Rechner (1) beschränkt ist und dass von dem ersten Rechner (1) empfangene, nicht überprüfte oder nicht überprüfbare Daten nur verschlossen, d. h. nicht verarbeitbar, auf dem zweiten Rechner (2) gespeichert werden.

2. Rechneranordnung nach Anspruch 1, **dadurch gekennzeichnet, dass** die empfangenen Daten in dem ersten Rechner (1) überprüft und nur überprüfte Daten dem zweiten Rechner (2) unverschlossen, d. h. verarbeitbar, zugeführt werden.

3. Rechneranordnung nach Anspruch 1, **dadurch gekennzeichnet, dass** die empfangenen Daten in dem ersten Rechner (1) und dem zweiten Rechner (2) unabhängig überprüft werden und dass nur übereinstimmend überprüfte Daten auf dem zweiten Rechner (2) unverschlossen, d. h. verarbeitbar, gespeichert werden.

4. Rechneranordnung nach einem der vorangehenden Ansprüche, **dadurch gekennzeichnet, dass** ein unmittelbarer Zugriff auf in einem zentralen Datenspeicher (15) enthaltene interne Daten der Rechneranordnung auf den zweiten Rechner (2) beschränkt ist und dass der erste Rechner (1) diese Daten nur auf Anforderung über den zweiten Rechner (2) erhält.

5. Rechneranordnung nach einem der vorangehenden Ansprüche, **dadurch gekennzeichnet, dass** ein unabhängiger redundanter, dritter Rechner (3) vorgesehen ist und dass sich der zweite und der dritte Rechner (2, 3) durch Vergleich ihrer Arbeitsergebnisse abgleichen.

## Claims

1. Computer arrangement which can be connected to a data transmission network (5), having a first computer (1) and a redundant, second computer (2) independent of the latter, both computers (1 and 2) being coordinated by comparing their operating results, **characterized in that** the reception of data from the data transmission network (5) is restricted to the first computer (1) and the transmission of data to the data transmission network (5) is restricted to the second computer (2), **in that** at least the initial processing of the received data is restricted to the first computer (1), and **in that** data which have been received by the first computer (1) and have not been checked or cannot be checked are stored on the second computer (2) only in a locked, that is to say non-processable, manner.

2. Computer arrangement according to Claim 1, **characterized in that** the received data are checked in the first computer (1) and only checked data are supplied to the second computer (2) in an unlocked, that is to say processable, manner.

3. Computer arrangement according to Claim 1, **characterized in that** the received data are independently checked in the first computer (1) and the second computer (2), and **in that** only matching checked data are stored on the second computer (2) in an unlocked, that is to say processable, manner.

4. Computer arrangement according to one of the preceding claims, **characterized in that** direct access to internal data relating to the computer arrangement which are contained in a central data memory (15) is restricted to the second computer (2), and **in that** the first computer (1) receives these data only on request via the second computer (2).

5. Computer arrangement according to one of the preceding claims, **characterized in that** an independent redundant, third computer (3) is provided, and **in that** the second and third computers (2, 3) are coordinated by comparing their operating results.

## Revendications

1. Système informatique qui peut être raccordé à un réseau ( 5 ) de transmission de données, comprenant un premier ordinateur ( 1 ) et un deuxième ordinateur ( 2 ) redondant en en étant indépendant, les deux ordinateurs ( 1 et 2 ) équilibrant leurs résultats de travail par comparaison, **caractérisé en ce que** la réception de données du réseau ( 5 ) de transmission de données est limitée au premier ordinateur ( 1 ) et l'émission de données sur le réseau ( 5 ) de transmission de données est limitée au deuxième ordinateur ( 2 ), **en ce qu'**au moins le premier traitement des données reçues est limité au premier ordinateur ( 1 ) et **en ce que** des données reçues par le premier ordinateur ( 1 ) non contrôlées ou non contrôlables sont mémorisées seulement de manière fermée, c'est-à-dire de manière à ne pas pouvoir être traitées, sur le deuxième ordinateur ( 2 ).

2. Système informatique suivant la revendication 1, **caractérisé en ce que** les données reçues dans le premier ordinateur ( 1 ) sont contrôlées et seulement des données contrôlées sont envoyées de manière non fermée, c'est-à-dire de manière à pouvoir être traitées, au deuxième ordinateur ( 2 ).

3. Système informatique suivant la revendication 1, **caractérisé en ce que** les données reçues dans le premier ordinateur ( 1 ) et dans le deuxième ordinateur ( 2 ) sont contrôlées indépendamment et **en ce que** seulement des données contrôlées de manière concordante sont mémorisées de manière non fermée, c'est-à-dire de manière à pouvoir être traitées, sur le deuxième ordinateur ( 2 ).

4. Système informatique suivant l'une des revendications précédentes, **caractérisé en ce qu'**un accès direct à des données internes contenues dans une mémoire ( 15 ) centrale de données du système informatique est limité au deuxième ordinateur ( 2 ) et **en ce que** le premier ordinateur ( 1 ) ne reçoit ces données par le deuxième ordinateur ( 2 ) que sur demande.

5. Système informatique suivant l'une des revendications précédentes, **caractérisé en ce qu'**il est prévu un troisième ordinateur ( 3 ) redondant d'une manière indépendante et **en ce que** le deuxième et le troisième ordinateurs ( 2, 3 ) équilibrent leurs résultats de travail par comparaison.
